# EUROPEAN PATENT SPECIFICATION

(11) **EP 3 581 457 B1**
(45) Date of publication and mention of the grant of the patent: **27.01.2021**
(21) Application number: 18475502.3
(22) Date of filing: 10.07.2018
(51) Int. Cl.: B61D 45/00, B60P 3/077, B60T 3/00

(54) **VERTICALLY ADJUSTABLE WHEEL BLOCK FOR CAR-CARRYING RAILWAY WAGONS**
HÖHENVERSTELLBARER RADBLOCK FÜR AUTOTRANSPORTWAGEN
BLOC DE ROUE RÉGLABLE VERTICALEMENT POUR TRANSPORT ROUTIER DE WAGONS DE CHEMIN DE FER

(30) Priority: 14.06.2018 SK 500632018 U
(43) Date of publication of application: 18.12.2019
(73) Proprietor: Tatravagónka, a.s., 058 01 Poprad (SK)
(72) Inventor: SLEBODNÍK, Vladimír, 05322 Odorín (SK)
(74) Representative: Belicka, Ivan

(56) References cited:
- DE-A1-102007 004 519
- GB-A- 2 290 590

## Description

### Field of technology

Technical solution relates to the vertically adjustable wheel block for car-carrying railway wagons.

### Background art

Currently, various solutions for securing of cars during transpiration on railway wagons are applied. The simplest solution is application of a wedge, which is attached to the wagon loading surface. But this method is laborious and also expensive, because large number of wedges is necessary. For example, in the document DE 10 2007 004519, there is described a solution of a wheel block, mainly for a railway car-carrying wagon, that has a retaining arm, which lies on the flat bearing arm and both arms are rotary by 360 degrees on one common joint. In another document EP 0497715, there is described a solution for device for blocking of transported vehicles on floors of transporting trailers or railway wagons.

In document GB 2290590 is described a device for preventing or hindering rolling movement of a vehicle wheel, the device comprising a first chock element secured to or integral with the base for engaging a leading surface of the wheel; and a removable second chock element being arranged to engage a trailing surface of the wheel; the device being provided with means for locking the second chock element in place against the trailing surface of the wheel, such that the wheel is held between two immovable chocks.

### Nature of technical solution

Shortcomings specified in the Background art are removed in the invention described in this application, whereby nature of the submitted technical solution is the vertically adjustable wheel block for car-carrying railway wagons. The vertically adjustable wheel block contains a fixed part, which can be attached to a loading surface of a wagon, and it has a cross-section of upside-down U, where on side walls, gouges of upside-down V letter shape with one arm shorter are located, whereby a movable part is located on the fixed part, where pins, which fit into the gouges of the fixed part, are located on the corresponding parts of the movable part. By a simple movement in horizontally-vertical direction, a horizontal position of the movable part is changed.

### Review of figures in the drawings

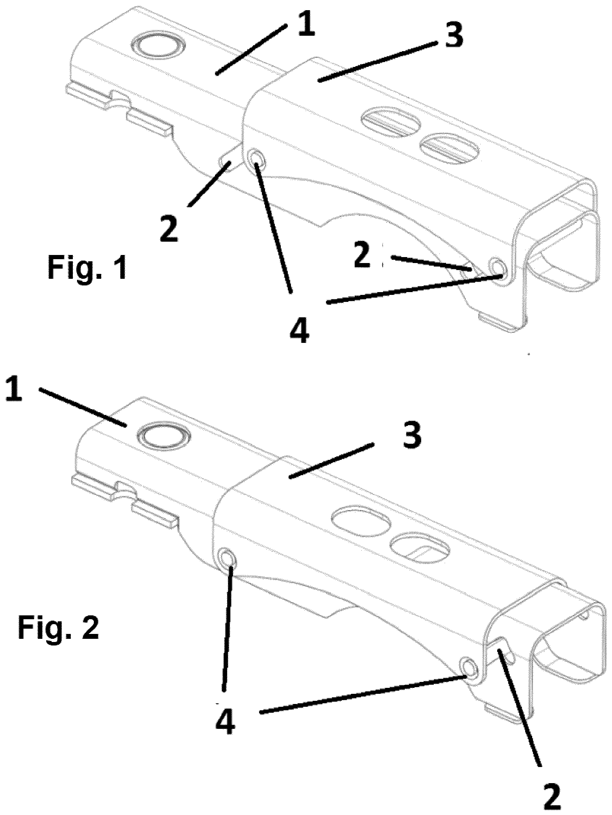

In the Fig. 1, the wheel block in the upper position is displayed, and in the Fig. 2, the wheel block in bottom position is displayed.

### Examples of technical solution embodiment

The vertically adjustable wheel block contains the fixed part 1, which can be attached to wagon loading surface and which has a cross-section of upside-down letter U, where gouges 2, of up-side down V letter shape with one arm shorter, are created on the side walls, whereby a movable part 3 is located on the fixed part 1, where pins 4, which fit into the gouges 2 of the fixed part 1, are located on the corresponding areas of the movable part 3. By a simple movement in horizontally-vertical direction, a horizontal position of the movable part 3, whereby range of the vertical direction depends only upon the car ground clearance.

## Claims

1. Vertically adjustable wheel block for car-carrying railway wagons, **characterised in that** it contains a fixed part (1), which has a cross-section of upside-down letter U, where gouges (2), of upside-down V letter shape with one arm shorter, are created on the side walls of the fixed part (1), whereby a movable part (3) is located on the fixed part (1), where pins (4), which fit into the gouges (2) of the fixed part (1), are located on the corresponding areas of the movable part (3).

2. Vertically adjustable wheel block for car-carrying railway wagons, **characterised in that** the fixed part (1) can be attached to a loading surface of a wagon.

## Patentansprüche

1. Ein höhenverstellbarer Radblock für Autotransportwagen **dadurch gekennzeichnet, dass** er einen festen Teil (1) mit einem umgekehrten U-förmigen Querschnitt umfasst, wobei die Nuten (2) in Form eines umgekehrten Buchstabens V mit einem kürzeren Arm an den Seitenwänden des festen Teils (1) gebildet sind, wobei der bewegliche Teil (3) auf dem festen Teil (1) angebracht ist, wobei Bolzen (4), die in die Nuten (2) des festen Teils (1) passen, auf den entsprechenden Teilen des beweglichen Teils (3) angebracht sind.

2. Ein höhenverstellbarer Radblock für Autotransportwagen **dadurch gekennzeichnet, dass** der feste Teil (1) an der Ladeoberfläche des Wagens befestigt werden kann.

## Revendications

1. Le bloc de roue réglable verticalement pour wagons de chemin de fer pour transport de véhicules, **caractérisé par le fait qu** 'il comprend une partie fixe (1) ayant une section transversale du haut vers le bas en forme de U, où sont formées des rainures en forme de V (2) avec un bras plus court, sur les parois latérales de la partie fixe (1), la partie mobile (3) étant située sur la partie fixe, là où les broches (4) emboîtées dans les rainures (2) de la partie fixe (1) sont situées dans les zones respectives de la partie mobile (3).

2. Le bloc de roue réglable verticalement pour wagons de chemin de fer pour transport de véhicules, **caractérisé par le fait que** la partie fixe (1) peut être liée à la surface de chargement du wagon.
